# EUROPÄISCHE PATENTANMELDUNG

(11) **EP 3 413 156 A1**
(43) Veröffentlichungstag der Anmeldung: **12.12.2018**
(21) Anmeldenummer: 17175382.5
(22) Anmeldetag: 09.06.2017
(51) Int. Cl.: G05D 1/02, A01D 34/00

(54) **VERFAHREN ZUM ERMITTELN EINER POSITION EINES AUTONOMEN MOBILEN GRÜNFLÄCHENBEARBEITUNGSROBOTERS UND GRÜNFLÄCHENBEARBEITUNGSSYSTEM**

(71) Anmelder: Andreas Stihl AG & Co. KG, 71336 Waiblingen (DE)
(72) Erfinder: Arenz, Martin Christoph, 70372 Stuttgart (DE); Ritzer, Peter, 6341 Ebbs (AT); Zöttl, Samuel, 6092 Birgitz (AT)
(74) Vertreter: Patentanwälte Ruff, Wilhelm, Beier, Dauster & Partner mbB

(57) **Zusammenfassung**

Die Erfindung bezieht sich auf ein Verfahren zum Ermitteln einer Position eines autonomen mobilen Grünflächenbearbeitungsroboters innerhalb einer zu bearbeitenden Fläche und ein Grünflächenbearbeitungssystem mit einem autonomen mobilen Grünflächenbearbeitungsroboter, insbesondere zum Ausführen des Verfahrens.

## Beschreibung

### ANWENDUNGSGEBIET UND STAND DER TECHNIK

Die Erfindung bezieht sich auf ein Verfahren zum Ermitteln einer Position eines autonomen mobilen Grünflächenbearbeitungsroboters innerhalb einer zu bearbeitenden Fläche und ein Grünflächenbearbeitungssystem mit einem autonomen mobilen Grünflächenbearbeitungsroboter, insbesondere zum Ausführen des Verfahrens.

Ein Verfahren zum Ermitteln einer Position eines Grünflächenbearbeitungsroboters innerhalb einer Fläche und ein Grünflächenbearbeitungssystem mit einem Grünflächenbearbeitungsroboter sind bekannt.

### AUFGABE UND LÖSUNG

Der Erfindung liegt als Aufgabe die Bereitstellung eines Verfahrens zum Ermitteln einer Position eines autonomen mobilen Grünflächenbearbeitungsroboters innerhalb einer zu bearbeitenden Fläche zugrunde, das verbesserte Eigenschaften aufweist, insbesondere eine höhere Genauigkeit. Des Weiteren liegt der Erfindung als Aufgabe die Bereitstellung eines Grünflächenbearbeitungssystems mit einem autonomen mobilen Grünflächenbearbeitungsroboter zugrunde.

Die Erfindung löst diese Aufgabe durch die Bereitstellung eines Verfahrens mit den Merkmalen des Anspruchs 1. Des Weiteren wird die der Erfindung zugrundeliegende Aufgabe durch ein Grünflächenbearbeitungssystem mit den Merkmalen des Anspruchs 8 gelöst. Vorteilhafte Weiterbildungen und/oder Ausgestaltungen der Erfindung sind in den abhängigen Ansprüchen beschrieben.

Das erfindungsgemäße Verfahren zum Ermitteln einer Position eines autonomen mobilen Grünflächenbearbeitungsroboters innerhalb einer zu bearbeitenden Fläche, wobei die Fläche von einem Begrenzungsdraht umgeben ist, wobei ein elektrischer Strom durch den Begrenzungsdraht fließt, wobei der elektrische Strom ein positionsabhängiges Magnetfeld in der Fläche erzeugt, weist die Schritte auf: a) Messen einer Eigenschaft des Magnetfelds an der Position des autonomen mobilen Grünflächenbearbeitungsroboters. b) Ermitteln und/oder Bestimmen eines Magnetfeld-Positionskoordinatenpaars allein und/oder nur aus der gemessenen Eigenschaft des Magnetfelds. c) Ermitteln und/oder Bestimmen der Position des Grünflächenbearbeitungsroboters in Abhängigkeit von dem ermittelten Magnetfeld-Positionskoordinatenpaar.

Da ein Verlauf des Begrenzungsdrahts und der durch den Begrenzungsdraht fließende Strom sich jeweils in der Regel mit der Zeit nicht unbeabsichtigt ändern sondern gleich bleiben werden, wird das in der Fläche erzeugte positionsabhängige Magnetfeld sich in der Regel mit der Zeit nicht unbeabsichtigt ändern sondern gleich bleiben. Somit ermöglicht das Verfahren eine über die Zeit relativ genau bleibende Positionsermittlung des Grünflächenbearbeitungsroboters innerhalb der Fläche. Probleme wie Schlupf bei einer Positionsermittlung mittels Odometrie oder Drift beziehungsweise Fehlerfortpflanzung bei einer Positionsermittlung mittels Trägheitspositionsbestimmung können bei dem erfindungsgemäßen Verfahren vermieden werden. In Folge dessen kann eine verbesserte autonome Bearbeitung der zu bearbeitenden Fläche mittels des Grünflächenbearbeitungsroboters ermöglicht werden.

Die zu bearbeitende Fläche kann beispielsweise eine Freifläche, insbesondere ein unversiegelter Boden, oder eine Grünfläche sein, wie eine Wiese mit Rasen. Vorteilhafterweise kann die Fläche von dem Begrenzungsdraht vollständig umgeben sein. Der Begrenzungsdraht kann als geschlossene Drahtschleife bezeichnet werden. Zumindest kann die Fläche soweit von dem Begrenzungsdraht umgeben sein, dass das positionsabhängige Magnetfeld überall in der Fläche erzeugt werden kann. Das Magnetfeld-Positionskoordinatenpaar allein aus der gemessenen Eigenschaft des Magnetfelds ermitteln kann bedeuten, dass für das Ermitteln des Magnetfeld-Positionskoordinatenpaars erstmal keine anderen Positionsbestimmungsverfahren verwendet zu werden brauchen, insbesondere keine Positionsbestimmungsverfahren, die nicht auf einem Messen der Eigenschaft des Magnetfelds an der Position des Grünflächenbearbeitungsroboters beruhen. Der Schritt b) kann zeitgleich mit dem Schritt a) und/oder zeitlich nach diesem ausgeführt werden. Der Schritt c) kann zeitgleich mit dem Schritt b) und/oder zeitlich nach diesem ausgeführt werden.

In einer Weiterbildung der Erfindung weist die Eigenschaft des Magnetfelds eine Magnetfeldstärke, eine Magnetfeldrichtung und/oder eine Ableitung des Magnetfelds auf. Insbesondere kann die Ableitung des Magnetfelds eine räumliche und/oder eine zeitliche Ableitung des Magnetfelds sein, vorteilhafterweise der Magnetfeldstärke und/oder der Magnetfeldrichtung.

In einer Weiterbildung der Erfindung weist der Schritt b) auf: Auswählen einer Magnetfeldeigenschaft, welche der gemessenen Eigenschaft des Magnetfelds am nächsten ist und/oder mit dieser übereinstimmt, aus einer hinterlegten und/oder gespeicherten Magnetfeldkarte der zu bearbeitenden Fläche. In der Magnetfeldkarte ist einer Mehrzahl von Magnetfeld-Positionskoordinatenpaaren eine Mehrzahl von Magnetfeldeigenschaften zugeordnet. Auswählen des Magnetfeld-Positionskoordinatenpaars, welches der ausgewählten Magnetfeldeigenschaft zugeordnet ist. Vorteilhafterweise kann die Mehrzahl von Magnetfeld-Positionskoordinatenpaaren rasterförmig angeordnet sein. Insbesondere kann die Magnetfeldkarte in Form einer Tabelle und/oder einer Matrix vorliegen.

In einer Ausgestaltung der Erfindung weist das Verfahren die Schritte auf: Führen, insbesondere automatisches Führen, insbesondere mindestens, eines Magnetfeldsensors zum Messen der Eigenschaft des Magnetfelds zusammen mit einem Positionsbestimmungsgerät zum Bestimmen von Positionskoordinatenpaaren entlang der zur bearbeitenden Fläche und/oder über diese. Messen der Mehrzahl von Magnetfeldeigenschaften mittels des Magnetfeldsensors und Bestimmen der Mehrzahl von Magnetfeld-Positionskoordinatenpaaren mittels des Positionsbestimmungsgeräts während des Führens. Erstellen der Magnetfeldkarte mittels Zuordnen der gemessenen Mehrzahl von Magnetfeldeigenschaften zu der bestimmten Mehrzahl von Magnetfeld-Positionskoordinatenpaaren. Hinterlegen und/oder Speichern der erstellten Magnetfeldkarte. Dies ermöglicht die Magnetfeldkarte der Fläche zu erstellen und zu hinterlegen, insbesondere zeitlich vor dem Schritt b). Vorteilhafterweise kann das Bestimmen von Positionskoordinaten mittels des Positionsbestimmungsgeräts nicht auf einem Messen der Eigenschaft des Magnetfelds beruhen beziehungsweise von diesem unabhängig sein. Das Bestimmen der Mehrzahl von Magnetfeld-Positionskoordinatenpaaren kann rasterförmig vorgegeben werden.

In einer Ausgestaltung der Erfindung weist das Verfahren die Schritte auf: Vorgeben eines, insbesondere spezifischen, Verlaufs des Begrenzungsdrahts um die zu bearbeitende Fläche und des elektrischen Stroms durch den Begrenzungsdraht. Berechnen der Mehrzahl von Magnetfeldeigenschaften für die Mehrzahl von Magnetfeld-Positionskoordinatenpaaren in Abhängigkeit von dem vorgegebenen Verlauf des Begrenzungsdrahts und dem vorgegebenen elektrischen Strom. Erstellen der Magnetfeldkarte mittels Zuordnen der berechneten Mehrzahl von Magnetfeldeigenschaften zu der Mehrzahl von Magnetfeld-Positionskoordinatenpaaren. Hinterlegen und/oder Speichern der erstellten Magnetfeldkarte. Dies ermöglicht die Magnetfeldkarte der Fläche zu erstellen und zu hinterlegen, insbesondere zeitlich vor dem Schritt b). Vorteilhafterweise kann das Berechnen mittels der Maxwell-Gleichungen erfolgen, insbesondere mittels des Durchflutungsgesetzes, des ampèreschen Gesetzes und/oder des Biot-Savart-Gesetzes. Das Bestimmen der Mehrzahl von Magnetfeld-Positionskoordinatenpaaren kann rasterförmig vorgegeben werden.

In einer Ausgestaltung der Erfindung weist das Verfahren den Schritt auf: Übertragen, insbesondere automatisches und/oder drahtloses Übertragen, der gemessenen Mehrzahl von Magnetfeldeigenschaften und der bestimmten Mehrzahl von Magnetfeld-Positionskoordinatenpaaren, des vorgegebenen Verlaufs des Begrenzungsdrahts und des vorgegebenen elektrischen Stroms, der berechneten Mehrzahl von Magnetfeldeigenschaften und der Mehrzahl von Magnetfeld-Positionskoordinatenpaaren und/oder der Magnetfeldkarte in den Grünflächenbearbeitungsroboter und/oder Hinterlegen der Magnetfeldkarte in diesem.

In einer Weiterbildung der Erfindung weist das Verfahren den Schritt auf: Vorgeben eines, insbesondere spezifischen, Verlaufs des Begrenzungsdrahts um die zu bearbeitende Fläche und des elektrischen Stroms durch den Begrenzungsdraht. Der Schritt b) weist auf: Berechnen des Magnetfeld-Positionskoordinatenpaars in Abhängigkeit von dem vorgegebenen Verlauf des Begrenzungsdrahts und dem vorgegebenen elektrischen Strom. Vorteilhafterweise kann das Berechnen mittels der Maxwell-Gleichungen erfolgen, insbesondere mittels des Durchflutungsgesetzes, des ampèreschen Gesetzes und/oder des Biot-Savart-Gesetzes.

In einer Weiterbildung der Erfindung weist das Verfahren den Schritt auf: Bestimmen und/oder Ermitteln eines unkorrigierten Positionskoordinatenpaars des autonomen mobilen Grünflächenbearbeitungsroboters mittels Odometrie und/oder Trägheitspositionsbestimmung. Der Schritt c) weist auf, falls im Schritt b) mehrere Magnetfeld-Positionskoordinatenpaare ermittelt worden sind: Auswählen des Magnetfeld-Positionskoordinatenpaars, welches dem unkorrigierten Positionskoordinatenpaar am nächsten ist und/oder mit diesem übereinstimmt, aus den mehreren ermittelten Magnetfeld-Positionskoordinatenpaaren. Dies ermöglicht trotz der mehreren im Schritt b) ermittelten Magnetfeld-Positionskoordinatenpaare eine eindeutige Ermittlung der Position des Grünflächenbearbeitungsroboters im Schritt c). In der Regel wird das positionsabhängige Magnetfeld beziehungsweise seine Eigenschaft an verschiedenen Positionen verschieden sein und somit eine eindeutige Positionsermittlung möglich sein. Falls jedoch an mehreren Positionen die Eigenschaft des Magnetfelds gleich ist, kann es passieren, dass im Schritt b) mehrere Magnetfeld-Positionskoordinatenpaare ermittelt werden können. Probleme wie Schlupf bei einer Positionsbestimmung mittels Odometrie oder Drift beziehungsweise Fehlerfortpflanzung bei einer Positionsbestimmung mittels Trägheitspositionsbestimmung können dabei unbedeutend sein, da die Position nicht mittels Odometrie und/oder Trägheitspositionsbestimmung hauptsächlich ermittelt zu werden braucht, sondern nur plausibilisiert werden kann.

In einer Weiterbildung der Erfindung weist das Verfahren den Schritt auf: Steuern, insbesondere automatisches Steuern, einer Bewegung des Grünflächenbearbeitungsroboters auf der Fläche in Abhängigkeit von der ermittelten Position, vorteilhafterweise derart, dass der Grünflächenbearbeitungsroboter auf der Fläche bleibt, insbesondere innerhalb des Begrenzungsdrahts. Dies ermöglicht eine verbesserte autonome Bearbeitung der zu bearbeitenden Fläche mittels des autonomen mobilen Grünflächenbearbeitungsroboters.

Autonom Bearbeiten kann bedeuten, dass sich der Grünflächenbearbeitungsroboter auf der Fläche selbstständig, selbsttätig, selbstbestimmt, selbstgesteuert und/oder unabhängig von einem Benutzer bewegen und/oder agieren und/oder zumindest einen Parameter, wie insbesondere einen Streckenparameter, und/oder einen Umkehrpunkt auswählen kann. Autonom Bearbeiten kann zusätzlich oder alternativ bedeuten, dass der Grünflächenbearbeitungsroboter selbstständig mit einem Bearbeiten beginnen und/oder das Bearbeiten beenden kann. Beim autonomen Bearbeiten braucht der Grünflächenbearbeitungsroboter nicht durch den Benutzer gesteuert zu sein, insbesondere nicht ferngesteuert. In anderen Worten: bei dem autonomen Bearbeiten kann der Grünflächenbearbeitungsroboter insbesondere ohne menschliche Steuerung und/oder Führung arbeiten. Der Grünflächenbearbeitungsroboter kann als Serviceroboter und/oder Dienstleistungsroboter bezeichnet werden. Vorteilhafterweise kann der Grünflächenbearbeitungsroboter ein Bearbeitungswerkzeug zum Bearbeiten der zu bearbeitenden Fläche aufweisen.

Des Weiteren bezieht sich die Erfindung auf ein Grünflächenbearbeitungssystem, insbesondere zum Ausführen des zuvor beschriebenen Verfahrens. Das erfindungsgemäße Grünflächenbearbeitungssystem weist den autonomen mobilen Grünflächenbearbeitungsroboter auf. Der Grünflächenbearbeitungsroboter weist mindestens einen Magnetfeldsensor zum Messen der Eigenschaft des positionsabhängigen Magnetfelds an seiner Position innerhalb der Fläche auf. Das Grünflächenbearbeitungssystem, insbesondere der Grünflächenbearbeitungsroboter, ist dazu ausgebildet, allein aus der gemessenen Eigenschaft des Magnetfelds das Magnetfeld-Positionskoordinatenpaar zu ermitteln und in Abhängigkeit von dem Magnetfeld-Positionskoordinatenpaar die Position des Grünflächenbearbeitungsroboters zu ermitteln. Somit ermöglicht das Grünflächenbearbeitungssystem eine über die Zeit relativ genau bleibende Positionsermittlung des Grünflächenbearbeitungsroboters innerhalb der Fläche. Vorteilhafterweise kann der Magnetfeldsensor einen Hall-Sensor und/oder eine Spule aufweisen.

In einer Weiterbildung der Erfindung ist das Grünflächenbearbeitungssystem, insbesondere der Grünflächenbearbeitungsroboter dazu ausgebildet, die Bewegung des autonomen mobilen Grünflächenbearbeitungsroboters auf der zu bearbeitenden Fläche in Abhängigkeit von der ermittelten Position zu steuern, insbesondere automatisch, vorteilhafterweise derart, dass der Grünflächenbearbeitungsroboter auf der Fläche bleibt, insbesondere innerhalb des Begrenzungsdrahts. Dies ermöglicht eine verbesserte autonome Bearbeitung der Fläche mittels des Grünflächenbearbeitungsroboters.

In einer Weiterbildung der Erfindung weist der autonome mobile Grünflächenbearbeitungsroboter mindestens einen ersten Magnetfeldsensor und einen von dem ersten Magnetfeldsensor verschiedenen zweiten Magnetfeldsensor auf. Der erste Magnetfeldsensor definiert eine erste Messrichtung und der zweite Magnetfeldsensor definiert eine zweite Messrichtung. Der erste Magnetfeldsensor und der zweite Magnetfeldsensor sind derart zueinander ausgerichtet, dass die erste Messrichtung und die zweite Messrichtung nicht parallel zueinander und/oder voneinander verschieden sind. Dies kann ein Messen von verschiedenen Komponenten der Eigenschaft des Magnetfelds in verschiedenen Richtungen ermöglichen, soweit vorhanden. Vorteilhafterweise können die erste Messrichtung und die zweite Messrichtung rechtwinklig zueinander sein.

In einer Weiterbildung der Erfindung ist in dem Grünflächenbearbeitungssystem, insbesondere in dem Grünflächenbearbeitungsroboter, die Magnetfeldkarte der zu bearbeitenden Fläche hinterlegt. In der Magnetfeldkarte ist der Mehrzahl von Magnetfeld-Positionskoordinatenpaaren die Mehrzahl von Magnetfeldeigenschaften zugeordnet. Das Grünflächenbearbeitungssystem, insbesondere der Grünflächenbearbeitungsroboter, ist dazu ausgebildet, die Magnetfeldeigenschaft, welche der gemessenen Eigenschaft des Magnetfelds am nächsten ist, aus der hinterlegten Magnetfeldkarte auszuwählen und das Magnetfeld-Positionskoordinatenpaar, welches der ausgewählten Magnetfeldeigenschaft zugeordnet ist, auszuwählen.

In einer Ausgestaltung der Erfindung weist das Grünflächenbearbeitungssystem den Magnetfeldsensor zum Messen der Eigenschaft des Magnetfelds und das Positionsbestimmungsgerät zum Bestimmen von Positionskoordinatenpaaren auf. Das Grünflächenbearbeitungssystem ist dazu ausgebildet, die Magnetfeldkarte mittels Zuordnen der während des Führens mittels des Magnetfeldsensors gemessenen Mehrzahl von Magnetfeldeigenschaften zu der mittels des Positionsbestimmungsgeräts bestimmten Mehrzahl von Magnetfeld-Positionskoordinatenpaaren zu erstellen und die erstellte Magnetfeldkarte zu hinterlegen.

In einer Weiterbildung der Erfindung weist das Grünflächenbearbeitungssystem ein Eingabegerät und eine Recheneinheit auf. Das Eingabegerät ist zum Vorgeben des Verlaufs des Begrenzungsdrahts um die zu bearbeitende Fläche und des elektrischen Stroms durch den Begrenzungsdraht ausgebildet. Die Recheneinheit ist zum Zusammenwirken mit dem Eingabegerät und zum Berechnen des Magnetfeld-Positionskoordinatenpaars in Abhängigkeit von dem vorgegebenen Verlauf des Begrenzungsdrahts und dem vorgegebenen elektrischen Strom ausgebildet.

Zusätzlich oder alternativ kann die Recheneinheit zum Berechnen der Mehrzahl von Magnetfeldeigenschaften für die Mehrzahl von Magnetfeld-Positionskoordinatenpaaren in Abhängigkeit von dem vorgegebenen Verlauf des Begrenzungsdrahts und dem vorgegebenen elektrischen Strom ausgebildet sein. Das Grünflächenbearbeitungssystem kann dazu ausgebildet sein, die Magnetfeldkarte mittels Zuordnen der berechneten Mehrzahl von Magnetfeldeigenschaften zu der Mehrzahl von Magnetfeld-Positionskoordinatenpaaren zu erstellen und die erstellte Magnetfeldkarte zu hinterlegen.

In einer Ausgestaltung der Erfindung weist das Grünflächenbearbeitungssystem, insbesondere der Grünflächenbearbeitungsroboter, eine Benutzerschnittstelle auf. Die Benutzerschnittstelle ist zum Übertragen, insbesondere zum automatischen und/oder drahtlosen, der gemessenen Mehrzahl von Magnetfeldeigenschaften und der bestimmten Mehrzahl von Magnetfeld-Positionskoordinatenpaaren, des vorgegebenen Verlaufs des Begrenzungsdrahts und des vorgegebenen elektrischen Stroms, der berechneten Mehrzahl von Magnetfeldeigenschaften und der Mehrzahl von Magnetfeld-Positionskoordinatenpaaren und/oder der Magnetfeldkarte in das Grünflächenbearbeitungssystem, insbesondere in den Grünflächenbearbeitungsroboter, ausgebildet.

In einer Weiterbildung der Erfindung weist der autonome mobile Grünflächenbearbeitungsroboter ein Odometriepositionsbestimmungsgerät und/oder ein Trägheitspositionsbestimmungsgerät zum Bestimmen des unkorrigierten Positionskoordinatenpaars des Grünflächenbearbeitungsroboters auf. Das Grünflächenbearbeitungssystem, insbesondere der Grünflächenbearbeitungsroboter, ist dazu ausgebildet, falls es mehrere Magnetfeld-Positionskoordinatenpaare ermittelt hat, das Magnetfeld-Positionskoordinatenpaar, welches dem unkorrigierten Positionskoordinatenpaar am nächsten ist, aus den mehreren ermittelten Magnetfeld-Positionskoordinatenpaaren auszuwählen. Vorteilhafterweise kann der Grünflächenbearbeitungsroboter Laufräder zum selbständigen Bewegen und Lenken auf der Fläche aufweisen. Das Odometriepositionsbestimmungsgerät, soweit vorhanden, kann dazu ausgebildet sein, aus einem jeweiligen Umfang und einer jeweiligen Drehzahl der Laufräder das unkorrigierte Positionskoordinatenpaar zu bestimmen. Vorteilhafterweise kann das Trägheitspositionsbestimmungsgerät, soweit vorhanden, mindestens einen Beschleunigungs- und/oder Drehratensensor aufweisen.

In einer Weiterbildung der Erfindung ist der autonome mobile Grünflächenbearbeitungsroboter als ein Rasenmähroboter mit einem Rasenmähwerkzeug ausgebildet. Insbesondere kann der Grünflächenbearbeitungsroboter als ein Mulchmähroboter ausgebildet sein. Vorteilhafterweise kann das Rasenmähwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn umfassen. Dies kann ein Mähen von Gras, krautigen Pflanzen, holzigem Gestrüpp oder kleineren Gehölzen mittels des Rasenmähwerkzeugs ermöglichen. Vorteilhafterweise kann das Rasenmähwerkzeug als ein rotierendes Rasenmähwerkzeug und dazu ausgebildet sein, das zu mähende Gut im sogenannten Freischnittverfahren ohne Gegenschneide zu mähen, insbesondere durch Zentrifugalkraft des Rasenmähwerkzeugs einen Schneidvorgang zu erzeugen.

In einer Weiterbildung der Erfindung weist das Grünflächenbearbeitungssystem den Begrenzungsdraht und eine Stromquelle auf. Der Begrenzungsdraht ist zum Umgeben der zu bearbeitenden Fläche ausgebildet. Die Stromquelle ist zum Erzeugen des elektrischen Stroms durch den Begrenzungsdraht ausgebildet. Dies ermöglicht das positionsabhängige Magnetfeld in der Fläche zu erzeugen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein Ablaufdiagramm eines erfindungsgemäßen Verfahrens,
- Fig. 2: eine Seitenansicht eines autonomen mobilen Grünflächenbearbeitungsroboters eines erfindungsgemäßen Grünflächenbearbeitungssystems,
- Fig. 3: eine Unteransicht des Grünflächenbearbeitungsroboters der Fig. 2,
- Fig. 4: eine Perspektivansicht eines Magnetfeldsensors des Grünflächenbearbeitungsroboters der Fig. 2,
- Fig. 5: eine Draufsicht auf eine mittels des Grünflächenbearbeitungsroboters der Fig. 2 zu bearbeitende Fläche während eines Bearbeitens,
- Fig. 6: ein Graph einer Magnetfeldstärke über einer Positionskoordinate,
- Fig. 7: eine weitere Draufsicht auf die Fläche der Fig. 5 während eines Erstellens einer Magnetfeldkarte und
- Fig. 8: eine Vorderansicht eines Eingabegeräts des erfindungsgemäßen Grünflächenbearbeitungssystems.

### DETAILLIERTE BESCHREIBUNG DER AUSFÜHRUNGSBEISPIELE

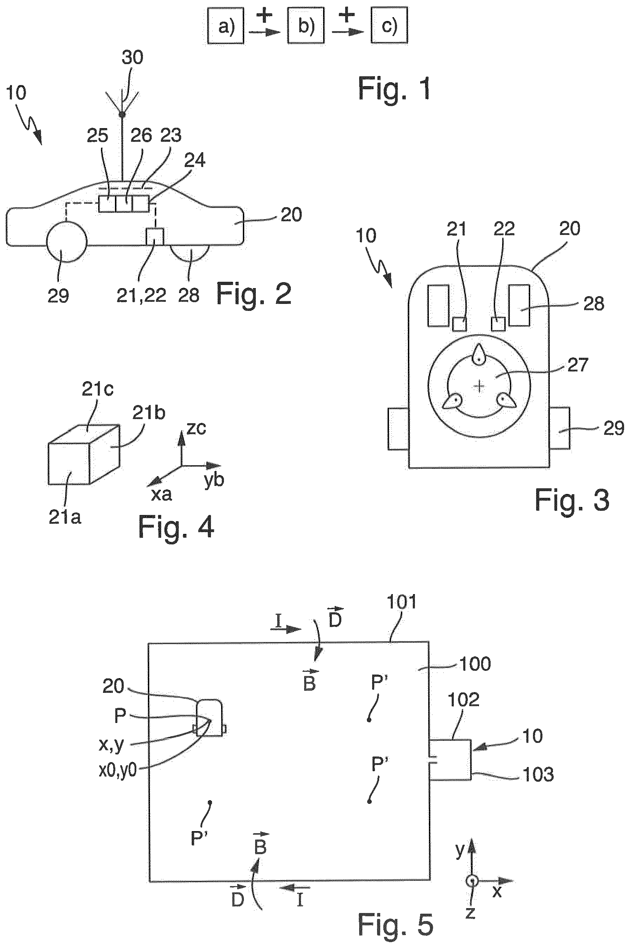

Fig. 2 bis 5 sowie 7 und 8 zeigen ein erfindungsgemäßes Grünflächenbearbeitungssystem 10. Das Grünflächenbearbeitungssystem weist einen autonomen mobilen Grünflächenbearbeitungsroboter 20 auf. Der Grünflächenbearbeitungsroboter 20 weist mindestens einen Magnetfeldsensor 21, 22 zum Messen einer Eigenschaft S, D eines positionsabhängigen Magnetfelds B an seiner Position P innerhalb einer zu bearbeitenden Fläche 100 auf. Das Grünflächenbearbeitungssystem 10 ist dazu ausgebildet, allein aus der gemessenen Eigenschaft S, D des Magnetfelds B ein Magnetfeld-Positionskoordinatenpaar x, y zu ermitteln und in Abhängigkeit von dem ermittelten Magnetfeld-Positionskoordinatenpaar x, y die Position P des Grünflächenbearbeitungsroboters 20 zu ermitteln.

Somit ermöglicht das Grünflächenbearbeitungssystem 10 eine über die Zeit relativ genau bleibende Positionsermittlung des Grünflächenbearbeitungsroboters 20 innerhalb der Fläche 100.

Im gezeigten Ausführungsbeispiel weist das Grünflächenbearbeitungssystem 10, insbesondere der Grünflächenbearbeitungsroboter 20, eine Recheneinheit 24 auf. Die Recheneinheit 24 ist zum Zusammenwirken mit dem mindestens einen Magnetfeldsensor 21, 22, wie in Fig. 2 durch die gestrichelte Linie angedeutet, und dazu ausgebildet, allein aus der gemessenen Eigenschaft S, D des Magnetfelds B das Magnetfeld-Positionskoordinatenpaar x, y zu ermitteln und in Abhängigkeit von dem Magnetfeld-Positionskoordinatenpaar x, y die Position P des Grünflächenbearbeitungsroboters 20 zu ermitteln.

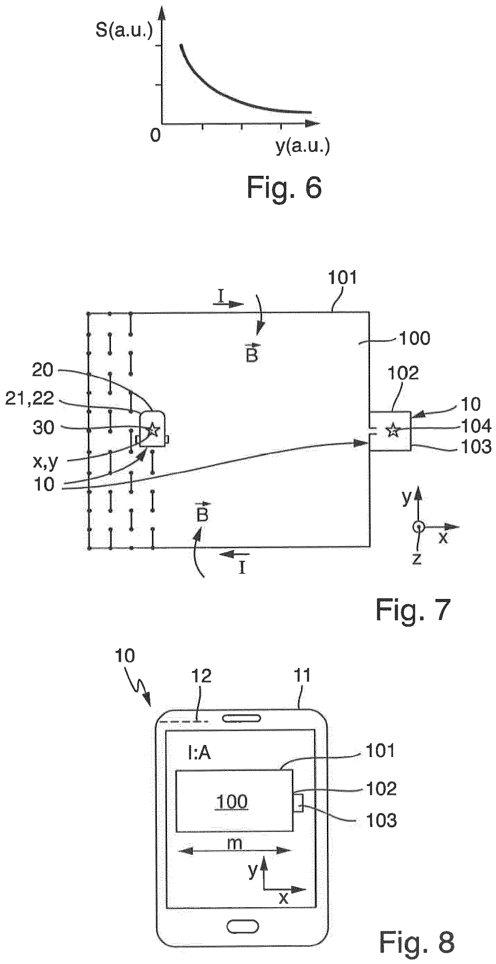

Des Weiteren weist das Grünflächenbearbeitungssystem 10 einen Begrenzungsdraht 101 und eine Stromquelle 102 auf, wie in Fig. 5 und 7 zu erkennen. Der Begrenzungsdraht 101 ist zum Umgeben der Fläche 100 ausgebildet beziehungsweise umgibt diese vollständig. Die Stromquelle 102 ist zum Erzeugen eines elektrischen Stroms I durch den Begrenzungsdraht 101 ausgebildet beziehungsweise erzeugt den elektrischen Strom I. Der elektrische Strom I erzeugt das positionsabhängige Magnetfeld B in der Fläche 100.

Im gezeigten Ausführungsbeispiel ist die Fläche 100 eine Wiese mit Rasen. Der Grünflächenbearbeitungsroboter 20 ist als ein Rasenmähroboter mit einem Rasenmähwerkzeug 27 ausgebildet, insbesondere als ein Mulchmähroboter. Das Rasenmähwerkzeug 27 umfasst ein Metallschneideblatt mit drei Schneidezähnen, wie in Fig. 3 zu erkennen. In alternativen Ausführungsbeispielen kann das Rasenmähwerkzeug nur einen einzigen Schneidezahn, zwei oder mehr als drei Schneidezähne umfassen. Das Rasenmähwerkzeug 27 ist als ein rotierendes Rasenmähwerkzeug und dazu ausgebildet, die Fläche 100 im Freischnittverfahren zu mähen, insbesondere durch Zentrifugalkraft des Rasenmähwerkzeugs 27 einen Schneidvorgang zu erzeugen.

Das Grünflächenbearbeitungssystem 10 beziehungsweise seine Recheneinheit 24 ist dazu ausgebildet, eine Bewegung des Grünflächenbearbeitungsroboters 20 auf der Fläche 100 in Abhängigkeit von ermittelten Position P automatisch zu steuern, vorteilhafter Weise derart, dass der Grünflächenbearbeitungsroboter 20 auf der Fläche 100 innerhalb des Begrenzungsdrahts 101 bleibt. Die Recheneinheit 24 kann als Steuereinheit bezeichnet werden.

Somit ermöglicht das Grünflächenbearbeitungssystem 10 eine verbesserte autonome Bearbeitung der Fläche 100 mittels des Grünflächenbearbeitungsroboters 20.

Fig. 1 zeigt ein erfindungsgemäßes Verfahren zum Ermitteln der Position P des autonomen mobilen Grünflächenbearbeitungsroboters 20 innerhalb der zu bearbeitenden Fläche 100, insbesondere mittels des zuvor beschriebenen Grünflächenbearbeitungssystems 10. Das Verfahren weist die Schritte auf: a) Messen der Eigenschaft S, D des Magnetfelds B an der Position P des Grünflächenbearbeitungsroboters 20. b) Ermitteln des Magnetfeld-Positionskoordinatenpaars x, y allein aus der gemessenen Eigenschaft S, D des Magnetfelds B. c) Ermitteln der Position P des Grünflächenbearbeitungsroboters 20 in Abhängigkeit von dem ermittelten Magnetfeld-Positionskoordinatenpaar x, y.

Somit ermöglicht das Verfahren die über die Zeit relativ genau bleibende Positionsermittlung des Grünflächenbearbeitungsroboters 20 innerhalb der Fläche 100.

Außerdem weist das Verfahren den Schritt auf: automatisches Steuern der Bewegung des Grünflächenbearbeitungsroboters 20 auf der Fläche 100 in Abhängigkeit von der ermittelten Position P, vorteilhafter derart, dass der Grünflächenbearbeitungsroboter 20 auf der Fläche 100 innerhalb des Begrenzungsdrahts 101 bleibt.

Somit ermöglicht das Verfahren die verbesserte autonome Bearbeitung der zu bearbeitenden Fläche 100 mittels des Grünflächenbearbeitungsroboters 20.

Im Detail weist der Grünflächenbearbeitungsroboter 20 zwei räumlich getrennte Magnetfeldsensoren beziehungsweise Magnetfeldsensorenanordnungen 21, 22 auf. Jede Magnetfeldsensorenanordnung 21, 22 weist einen ersten Magnetfeldsensor 21a, einen von dem ersten Magnetfeldsensor 21 a verschiedenen zweiten Magnetfeldsensor 21 b und einen von dem ersten und dem zweiten Magnetfeldsensor 21 a, 21 b verschiedenen dritten Magnetfeldsensor 21 c auf, wie in Fig. 4 zu erkennen. Der erste Magnetfeldsensor 21 a definiert eine erste Messrichtung xa, der zweite Magnetfeldsensor 21 b definiert eine zweite Messrichtung yb und der dritte Magnetfeldsensor 21 c definiert eine dritte Messrichtung zc. Der erste Magnetfeldsensor 21 a, der zweite Magnetfeldsensor 21 b und der dritte Magnetfeldsensor 21 c sind derart zueinander ausgerichtet, dass die erste Messrichtung xa, die zweite Messrichtung yb und die dritte Messrichtung zc nicht parallel zueinander sind, insbesondere rechtwinklig zueinander sind. Im gezeigten Ausführungsbeispiel sind der erste Magnetfeldsensor 21 a, der zweite Magnetfeldsensor 21 b und der dritte Magnetfeldsensor 21 c jeweils als ein Hall-Sensor ausgebildet. Die Magnetfeldsensorenanordnung 22 ist baugleich zur Magnetfeldanordnung 21. Die beiden Magnetfeldsensorenanordnungen 21, 22 ermöglichen das Messen einer Magnetfeldstärke S des Magnetfelds B in drei verschiedenen Richtungen x, y, z sowie deren räumliche und zeitliche Ableitung. Somit ermöglichen die Magnetfeldsensorenanordnungen 21, 22 auch ein Ermitteln und/oder Bestimmen eines Winkels beziehungsweise einer Ausrichtung des Grünflächenbearbeitungsroboters 20, insbesondere seiner Bewegung, zu dem Begrenzungsdraht 101.

Weiter weist der Grünflächenbearbeitungsroboter 20 vordere Laufräder 28, die schwenkbar sind, und hintere Laufräder 29 auf, die getrennt voneinander angetrieben sind. Somit kann sich der Grünflächenbearbeitungsroboter 20 auf der Fläche 100 selbstständig bewegen und lenken. Zudem weist der Grünflächenbearbeitungsroboter 20 einen nicht dargestellten Elektromotor zum Antrieb des Rasenmähwerkzeugs 27 auf. In alternativen Ausführungsbeispielen kann der Grünflächenbearbeitungsroboter einen Verbrennungsmotor, insbesondere einen Benzinmotor zum Antrieb des Rasenmähwerkzeugs aufweisen. Des Weiteren weist der Grünflächenbearbeitungsroboter 20 einen nicht dargestellten Akkumulator zur Antriebsenergieversorgung der hinteren Laufräder 29 und des Elektromotors zum Antrieb des Rasenmähwerkzeugs 27 auf. In alternativen Ausführungsbeispielen kann der Grünflächenbearbeitungsroboter eine Brennstoffzelle, einen Kraftstofftank oder eine andere Art einer Antriebsenergiequelle zur Antriebsenergieversorgung aufweisen.

Zudem weist das Grünflächenbearbeitungssystem 10 eine Basisstation 103 für den Grünflächenbearbeitungsroboter 20 auf, die hier an dem Begrenzungsdraht 101 angeordnet ist. Im gezeigten Ausführungsbeispiel ist die Basisstation 103 als eine Ladestation zum Wiederaufladen, insbesondere zum automatischen, des Akkumulators des Grünflächenbearbeitungsroboters 20 ausgebildet.

In der Regel wird das positionsabhängige Magnetfeld B beziehungsweise seine Eigenschaft an verschiedenen Positionen innerhalb der Fläche 100 verschieden sein, wie in Fig. 6 für die Magnetfeldstärke S für verschiedene y-Positionskoordinaten dargestellt, und somit eine eindeutige Positionsermittlung möglich sein. Falls jedoch an mehreren Positionen die Eigenschaft des Magnetfelds gleich ist, wie im gezeigten Ausführungsbeispiel in Fig. 5 an der Position P und den drei Positionen P', kann es passieren, dass im Schritt b) mehrere Magnetfeld-Positionskoordinatenpaare ermittelt werden können.

Der Grünflächenbearbeitungsroboter 20 weist ein Odometriepositionsbestimmungsgerät 25 und ein Trägheitspositionsgerät 26 jeweils zum Bestimmen eines unkorrigierten Positionskoordinatenpaars x0, y0 des Grünflächenbearbeitungsroboters 20 auf. Das Grünflächenbearbeitungssystem 10 beziehungsweise seine Recheneinheit 24 ist dazu ausgebildet, falls es beziehungsweise sie mehrere Magnetfeld-Positionskoordinatenpaare ermittelt hat, das Magnetfeld-Positionskoordinatenpaar x, y, welches dem unkorrigierten Positionskoordinatenpaar x0, y0 am nächsten ist, aus den mehreren ermittelten Magnetfeld-Positionskoordinatenpaaren auszuwählen. Dies ermöglicht eine eindeutige Positionsermittlung.

Im Detail ist die Recheneinheit 24 zum Zusammenwirken mit dem Odometriepositionsbestimmungsgerät 25 und dem Trägheitspositionsbestimmungsgerät 26 ausgebildet. Das Odometriepositionsbestimmungsgerät 25 ist zum Zusammenwirken mit den hinteren Laufrädern 29 ausgebildet, insbesondere dazu, aus einem jeweiligen Umfang und einer jeweiligen Drehzahl der hinteren Laufräder 29 das unkorrigierte Positionskoordinatenpaar x0, y0 zu bestimmen. Das Odometriepositionsbestimmungsgerät 25 und das Trägheitspositionsbestimmungsgerät 26 sind jeweils dazu ausgebildet, an der Basisstation 103, deren Position wohl definiert und stationär ist, kalibriert zu werden, insbesondere um Probleme wie Schlupf bei der Odometrie oder Drift bei der Trägheitspositionsbestimmung nicht allzu groß werden zu lassen. In alternativen Ausführungsbeispielen kann es ausreichen, wenn der Grünflächenbearbeitungsroboter entweder das Odometriepositionsbestimmungsgerät oder das Trägheitspositionsbestimmungsgerät aufweisen kann.

Entsprechend weist das Verfahren den Schritt auf: Bestimmen des unkorrigierten Positionsbestimmungskoordinatenpaars x0, y0 des Grünflächenbearbeitungsroboters 20 mittels Odometrie und/oder Trägheitspositionsbestimmung. Der Schritt c) weist auf, falls im Schritt b) mehrere Magnetfeld-Positionskoordinatenpaare ermittelt worden sind: Auswählen des Magnetfeld-Positionskoordinatenpaars x, y, welches dem unkorrigierten Positionskoordinatenpaar x0, y0 am nächsten ist, aus den mehreren ermittelten Magnetfeld-Positionskoordinatenpaaren. Dies ermöglicht eine eindeutige Positionsermittlung.

Des Weiteren ist in dem Grünflächenbearbeitungssystem 10 beziehungsweise seiner Recheneinheit 24 eine Magnetfeldkarte der Fläche 100 hinterlegt. In der Magnetfeldkarte ist eine Mehrzahl von Magnetfeld-Positionskoordinatenpaaren MFPKG einer Mehrzahl von Magnetfeldeigenschaften MFEG zugeordnet. Das Grünflächenbearbeitungssystem 10 beziehungsweise seine Recheneinheit 24 ist dazu ausgebildet, die Magnetfeldeigenschaft MFE, welche der gemessenen Eigenschaft S, D des Magnetfelds B am nächsten ist, aus der hinterlegten Magnetfeldkarte auszuwählen und das Magnetfeld-Positionskoordinatenpaar x, y, welches der ausgewählten Magnetfeldeigenschaft MFE zugeordnet ist, auszuwählen. Die Recheneinheit 24 kann als Speichereinheit bezeichnet werden.

Entsprechend weist der Schritt b) auf: Auswählen der Magnetfeldeigenschaft MFE, welche der gemessenen Eigenschaft S, D des Magnetfelds B am nächsten ist, aus der hinterlegten Magnetfeldkarte der Fläche 100. Auswählen des Magnetfeld-Positionsfeldkoordinatenpaars x, y, welches der ausgewählten Magnetfeldeigenschaft MFE zugeordnet ist.

Außerdem weist das Grünflächenbearbeitungssystem 10 ein Positionsbestimmungsgerät 30 zum Bestimmen von Positionskoordinatenpaaren x, y auf, wie in Fig. 2 und 7 zu erkennen. Das Positionsbestimmungsgerät 30 ist zum wiederlösbaren Befestigen an dem Grünflächenbearbeitungsroboter 20 und zum Zusammenwirken mit der Recheneinheit 24 ausgebildet. Vorteilhafterweise kann das Positionsbestimmungsgerät 30 von einem Fachhändler für eine kurze Zeitdauer einem Benutzer zur Verfügung gestellt sein und/oder werden. In alternativen Ausführungsbeispielen kann das Grünflächenbearbeitungssystem einen von dem Grünflächenbearbeitungsroboter verschiedenen Kalibrierroboter aufweisen. Der Kalibrierroboter kann zu dem Grünflächenbearbeitungsroboter baugleich sein mit der Ausnahme, dass der Kalibrierroboter kein Rasenmähwerkzeug, kein Odometriepositionsbestimmungsgerät und/oder kein Trägheitspositionsbestimmungsgerät aufzuweisen braucht. In weiteren alternativen Ausführungsbeispielen kann das Grünflächenbearbeitungssystem ein Magnetfeldkarten-Erstellungsgerät aufweisen, das den Magnetfeldsensor und das Positionsbestimmungsgerät aufweisen kann.

Im gezeigten Ausführungsbeispiel weist das Positionsbestimmungsgerät 30 einen Satelliten-Positionsbestimmungsempfänger auf. Zudem weist das Grünflächenbearbeitungssystem 10 ein weiteres Positionsbestimmungsgerät 104 in Form eines weiteren Satelliten-Positionsbestimmungsempfängers auf. Das weitere Positionsbestimmungsgerät 104 ist stationär im Bereich der Fläche 100 angeordnet, im Detail wiederlösbar an der Basisstation 103 befestigt. Das Positionsbestimmungsgerät 30 und das weitere Positionsbestimmungsgerät 104 sind dazu ausgebildet, in Signalverbindung miteinander zu stehen, um eine relativ genaue Positionsbestimmung zu ermöglichen. In alternativen Ausführungsbeispielen braucht das Positionsbestimmungsgerät nicht den Satelliten-Positionsbestimmungsempfänger aufzuweisen, kann aber vorteilhafterweise entsprechend derart ausgebildet sein, dass das Bestimmen von Positionskoordinaten nicht auf einem Messen der Eigenschaft des Magnetfelds beruhen beziehungsweise von diesem unabhängig sein kann.

Das Verfahren weist die Schritte auf: Führen der Magnetfeldsensoren 21, 22 zum Messen der Eigenschaft S, D des Magnetfelds B zusammen mit dem Positionsbestimmungsgerät 30 zum Bestimmen von Positionskoordinatenpaaren x, y entlang der Fläche 100. Messen der Mehrzahl von Magnetfeldeigenschaften MFEG mittels der Magnetfeldsensoren 21, 22 und Bestimmen der Mehrzahl von Magnetfeld-Koordinatenpaaren MFPKG mittels des Positionsbestimmungsgeräts 30 während des Führens. Erstellen der Magnetfeldkarte mittels Zuordnen der gemessenen Mehrzahl von Magnetfeldeigenschaften MFEG zu der bestimmten Mehrzahl von Magnetfeld-Positionskoordinatenpaaren MFPKG. Hinterlegen der erstellten Magnetfeldkarte. Im Detail bewegt sich der Grünflächenbearbeitungsroboter 20 mit dem Positionsbestimmungsgerät 30 automatisch rasterförmig entlang der Fläche 100. Mittels der Magnetfeldsensoren 21, 22 kann der Grünflächenbearbeitungsroboter 20 den Begrenzungsdraht 101 und somit ein Ausmaß der Fläche 100 erkennen und in Folge dessen Rasterpunkte selbstständig vorgeben und während des Erstellens der Magnetfeldkarte auf der Fläche 100 bleiben.

Entsprechend ist das Grünflächenbearbeitungssystem 10 dazu ausgebildet, die Magnetfeldkarte mittels Zuordnen der während des Führens mittels der Magnetfeldsensoren 21, 22 gemessenen Mehrzahl von Magnetfeldeigenschaften MFEG zu der mittels des Positionsbestimmungsgeräts 30 bestimmten Mehrzahl von Magnetfeld-Positionskoordinatenpaaren MFPKG zu erstellen und die erstellte Magnetfeldkarte zu hinterlegen, insbesondere mittels beziehungsweise in der Recheneinheit 24.

Neben dem Positionsbestimmungsgerät 30 weist das Grünflächenbearbeitungssystem 10 ein Eingabegerät 11 auf, wie in Fig. 8 zu erkennen. Das Eingabegerät 11 ist zum Vorgeben eines Verlaufs des Begrenzungsdrahts 101 um die zu bearbeitende Fläche 100 und des elektrischen Stroms I durch den Begrenzungsdraht 101 ausgebildet. Die Recheneinheit 24 ist zum Zusammenwirken mit dem Eingabegerät 11 und zum Berechnen der Mehrzahl von Magnetfeldeigenschaften MFEG für die Mehrzahl von Magnetfeld-Positionskoordinatenpaaren MFPKG in Abhängigkeit von dem vorgegebenen Verlauf des Begrenzungsdrahts 101 und dem vorgegebenen elektrischen Strom I ausgebildet. Das Grünflächenbearbeitungssystem 10 ist dazu ausgebildet, die Magnetfeldkarte mittels Zuordnen der berechneten Mehrzahl von Magnetfeldeigenschaften MFEG zu der Mehrzahl von Magnetfeld-Positionskoordinaten MFPKG zu erstellen und die erstellte Magnetfeldkarte zu hinterlegen, insbesondere mittels beziehungsweise in der Recheneinheit 24. In alternativen Ausführungsbeispielen kann es ausreichen, dass das Grünflächenbearbeitungssystem entweder das Positionsbestimmungsgerät oder das Eingabegerät aufweisen kann.

Entsprechend weist das Verfahren die Schritte auf: Vorgeben des Verlaufs des Begrenzungsdrahts 101 um die Fläche 100 und des elektrischen Stroms I durch den Begrenzungsdraht 101. Berechnen der Mehrzahl von Magnetfeldeigenschaften MFEG für die Mehrzahl von Magnetfeld-Positionskoordinatenpaaren MFPKG in Abhängigkeit von dem vorgegebenen Verlauf des Begrenzungsdrahts 101 und dem vorgegebenen elektrischen Strom I. Erstellen der Magnetfeldkarte mittels zuordnen der berechneten Mehrzahl von Magnetfeldeigenschaften MFEG zu der Mehrzahl von Magnetfeld-Positionskoordinatenpaaren MFPKG. Hinterlegen der erstellten Magnetfeldkarte.

Im gezeigten Ausführungsbeispiel weist das Eingabegerät 11 ein Smartphone mit einem Touchscreen auf. Des Weiteren weist das Eingabegerät 11 eine Eingabegerät-Benutzerschnittstelle 12 in Form einer Antenne auf. Außerdem weist der Grünflächenbearbeitungsroboter 20 eine Roboter-Benutzerschnittstelle 23 in Form einer Antenne auf. Die Eingabegerät-Benutzerschnittstelle 12 und die Roboter-Benutzerschnittstelle 23 sind zum Zusammenwirken miteinander und zum Übertragen, insbesondere zum drahtlosen, des vorgegebenen Verlaufs des Begrenzungsdrahts 101 und des vorgegebenen elektrischen Stroms I ausgebildet. Die Roboter-Benutzerschnittstelle 23 ist zum Zusammenwirken mit der Recheneinheit 24 ausgebildet. In alternativen Ausführungsbeispielen kann der Grünflächenbearbeitungsroboter das Eingabegerät umfassen oder das Eingabegerät kann mit der Recheneinheit als ein getrenntes Bauteil ausgebildet sein. Entsprechend weist das Verfahren den Schritt auf: Übertragen des vergebenen Verlaufs des Begrenzungsdrahts 101 und des vorgegebenen elektrischen Stroms I.

In alternativen Ausführungsbeispielen braucht keine Magnetfeldkarte erstellt zu werden. Die Recheneinheit kann zum Berechnen des Magnetfeld-Positionskoordinatenpaars in Abhängigkeit von dem vorgegebenen Verlauf des Begrenzungsdrahts und dem vorgegebenen elektrischen Stroms ausgebildet sein. Entsprechend kann der Schritt b) aufweisen: Berechnen des Magnetfeld-Positionskoordinatenpaars in Abhängigkeit von dem vorgegebenen Verlauf des Begrenzungsdrahts und dem vorgegebenen elektrischen Strom.

Wie die gezeigten und oben erläuterten Ausführungsbeispiele deutlich machen, stellt die Erfindung ein vorteilhaftes Verfahren zum Ermitteln einer Position eines autonomen mobilen Grünflächenbearbeitungsroboters innerhalb einer zu bearbeitenden Fläche bereit, das verbesserte Eigenschaften aufweist, insbesondere eine höhere Genauigkeit, und ein Grünflächenbearbeitungssystem mit einem solchen Grünflächenbearbeitungsroboter, insbesondere zum Ausführen des Verfahrens. Das Verfahren und das Grünflächenbearbeitungssystem ermöglichen eine über die Zeit relativ genau bleibende Positionsermittlung des Grünflächenbearbeitungsroboters innerhalb der Fläche und somit eine verbesserte autonome Bearbeitung der Fläche mittels des Grünflächenbearbeitungsroboters.

## Patentansprüche

1. Verfahren zum Ermitteln einer Position (P) eines autonomen mobilen Grünflächenbearbeitungsroboters (20) innerhalb einer zu bearbeitenden Fläche (100), wobei die Fläche von einem Begrenzungsdraht (101) umgeben ist, wobei ein elektrischer Strom (I) durch den Begrenzungsdraht fließt, wobei der elektrische Strom ein positionsabhängiges Magnetfeld (B) in der Fläche erzeugt, wobei das Verfahren die Schritte aufweist:
a) Messen einer Eigenschaft (S, D) des Magnetfelds (B) an der Position (P) des autonomen mobilen Grünflächenbearbeitungsroboters (20),
b) Ermitteln eines Magnetfeld-Positionskoordinatenpaars (x, y) allein aus der gemessenen Eigenschaft des Magnetfelds und
c) Ermitteln der Position des Grünflächenbearbeitungsroboters in Abhängigkeit von dem ermittelten Magnetfeld-Positionskoordinatenpaar (x, y).

2. Verfahren nach Anspruch 1,
- wobei die Eigenschaft des Magnetfelds (B) eine Magnetfeldstärke (S), eine Magnetfeldrichtung (D) und/oder eine Ableitung des Magnetfelds aufweist.

3. Verfahren nach Anspruch 1 oder 2, wobei der Schritt b) aufweist:
- Auswählen einer Magnetfeldeigenschaft (MFE), welche der gemessenen Eigenschaft (S, D) des Magnetfelds (B) am nächsten ist, aus einer hinterlegten Magnetfeldkarte der zu bearbeitenden Fläche (100),
- wobei in der Magnetfeldkarte einer Mehrzahl von Magnetfeld-Positionskoordinatenpaaren (MFPKG) eine Mehrzahl von Magnetfeldeigenschaften (MFEG) zugeordnet ist, und
- Auswählen des Magnetfeld-Positionskoordinatenpaars (x, y), welches der ausgewählten Magnetfeldeigenschaft zugeordnet ist.

4. Verfahren nach Anspruch 3, wobei das Verfahren die Schritte aufweist:
- Führen eines Magnetfeldsensors (21, 22) zum Messen der Eigenschaft (S, D) des Magnetfelds (B) zusammen mit einem Positionsbestimmungsgerät (30) zum Bestimmen von Positionskoordinatenpaaren (x, y) entlang der zu bearbeitenden Fläche (100),
- Messen der Mehrzahl von Magnetfeldeigenschaften (MFEG) mittels des Magnetfeldsensors und Bestimmen der Mehrzahl von Magnetfeld-Positionskoordinatenpaaren (MFPKG) mittels des Positionsbestimmungsgeräts während des Führens,
- Erstellen der Magnetfeldkarte mittels Zuordnen der gemessenen Mehrzahl von Magnetfeldeigenschaften zu der bestimmten Mehrzahl von Magnetfeld-Positionskoordinatenpaaren und
- Hinterlegen der erstellten Magnetfeldkarte.

5. Verfahren nach Anspruch 3 oder 4, wobei das Verfahren die Schritte aufweist:
- Vorgeben eines Verlaufs des Begrenzungsdrahts (101) um die zu bearbeitende Fläche (100) und des elektrischen Stroms (I) durch den Begrenzungsdraht,
- Berechnen der Mehrzahl von Magnetfeldeigenschaften (MFEG) für die Mehrzahl von Magnetfeld-Positionskoordinatenpaaren (MFPKG) in Abhängigkeit von dem vorgegebenen Verlauf des Begrenzungsdrahts und dem vorgegebenen elektrischen Strom,
- Erstellen der Magnetfeldkarte mittels Zuordnen der berechneten Mehrzahl von Magnetfeldeigenschaften zu der Mehrzahl von Magnetfeld-Positionskoordinatenpaaren und
- Hinterlegen der erstellten Magnetfeldkarte.

6. Verfahren nach einem der vorhergehenden Ansprüche,
- wobei das Verfahren den Schritt aufweist: Vorgeben eines Verlaufs des Begrenzungsdrahts (101) um die zu bearbeitende Fläche (100) und des elektrischen Stroms (I) durch den Begrenzungsdraht, und
- wobei der Schritt b) aufweist:
Berechnen des Magnetfeld-Positionskoordinatenpaars (x, y) in Abhängigkeit von dem vorgegebenen Verlauf des Begrenzungsdrahts und dem vorgegebenen elektrischen Strom.

7. Verfahren nach einem der vorhergehenden Ansprüche,
- wobei das Verfahren den Schritt aufweist:
Bestimmen eines unkorrigierten Positionskoordinatenpaars (x0, y0) des autonomen mobilen Grünflächenbearbeitungsroboters (20) mittels Odometrie und/oder Trägheitspositionsbestimmung und
- wobei der Schritt c) aufweist, falls im Schritt b) mehrere Magnetfeld-Positionskoordinatenpaare ermittelt worden sind:
Auswählen des Magnetfeld-Positionskoordinatenpaars (x, y), welches dem unkorrigierten Positionskoordinatenpaar am nächsten ist, aus den mehreren ermittelten Magnetfeld-Positionskoordinatenpaaren.

8. Grünflächenbearbeitungssystem (10), insbesondere zum Ausführen des Verfahrens nach einem der vorhergehenden Ansprüche,
- wobei das Grünflächenbearbeitungssystem (10) einen autonomen mobilen Grünflächenbearbeitungsroboter (20) aufweist, wobei der Grünflächenbearbeitungsroboter mindestens einen Magnetfeldsensor (21, 21 a, 21 b, 21 c, 22) zum Messen einer Eigenschaft (S, D) eines positionsabhängigen Magnetfelds (B) an seiner Position (P) innerhalb einer zu bearbeitenden Fläche (100) aufweist, und
- wobei das Grünflächenbearbeitungssystem dazu ausgebildet ist, allein aus der gemessenen Eigenschaft des Magnetfelds ein Magnetfeld-Positionskoordinatenpaar (x, y) zu ermitteln und in Abhängigkeit von dem Magnetfeld-Positionskoordinatenpaar die Position des Grünflächenbearbeitungsroboters zu ermitteln.

9. Grünflächenbearbeitungssystem (10) nach Anspruch 8,
- wobei das Grünflächenbearbeitungssystem (10) dazu ausgebildet ist, eine Bewegung des autonomen mobilen Grünflächenbearbeitungsroboters (20) auf der zu bearbeitenden Fläche (100) in Abhängigkeit von der ermittelten Position (P) zu steuern.

10. Grünflächenbearbeitungssystem (10) nach Anspruch 8 oder 9,
- wobei der autonome mobile Grünflächenbearbeitungsroboter (20) mindestens einen ersten Magnetfeldsensor (21a) und einen von dem ersten Magnetfeldsensor verschiedenen zweiten Magnetfeldsensor (21 b) aufweist, wobei der erste Magnetfeldsensor eine erste Messrichtung (xa) definiert und wobei der zweite Magnetfeldsensor eine zweite Messrichtung (yb) definiert, wobei der erste Magnetfeldsensor und der zweite Magnetfeldsensor derart zueinander ausgerichtet sind, dass die erste Messrichtung und die zweite Messrichtung nicht parallel zueinander sind.

11. Grünflächenbearbeitungssystem (10) nach einem der Ansprüche 8 bis 10,
- wobei in dem Grünflächenbearbeitungssystem (10) eine Magnetfeldkarte der zu bearbeitenden Fläche (100) hinterlegt ist, wobei in der Magnetfeldkarte einer Mehrzahl von Magnetfeld-Positionskoordinatenpaaren (MFPKG) eine Mehrzahl von Magnetfeldeigenschaften (MFEG) zugeordnet ist, und
- wobei das Grünflächenbearbeitungssystem dazu ausgebildet ist, eine Magnetfeldeigenschaft (MFE), welche der gemessenen Eigenschaft (S, D) des Magnetfelds (B) am nächsten ist, aus der hinterlegten Magnetfeldkarte auszuwählen und das Magnetfeld-Positionskoordinatenpaar (x, y), welches der ausgewählten Magnetfeldeigenschaft zugeordnet ist, auszuwählen.

12. Grünflächenbearbeitungssystem (10) nach einem der Ansprüche 8 bis 11, wobei das Grünflächenbearbeitungssystem (10) aufweist:
- ein Eingabegerät (11) und
- eine Recheneinheit (24),
- wobei das Eingabegerät zum Vorgeben eines Verlaufs des Begrenzungsdrahts (101) um die zu bearbeitende Fläche (100) und des elektrischen Stroms (I) durch den Begrenzungsdraht ausgebildet ist und
- wobei die Recheneinheit zum Zusammenwirken mit dem Eingabegerät und zum Berechnen des Magnetfeld-Positionskoordinatenpaars (x, y) in Abhängigkeit von dem vorgegebenen Verlauf des Begrenzungsdrahts und dem vorgegebenen elektrischen Strom ausgebildet ist.

13. Grünflächenbearbeitungssystem (10) nach einem der Ansprüche 8 bis 12,
- wobei der autonome mobile Grünflächenbearbeitungsroboter (20) ein Odometriepositionsbestimmungsgerät (25) und/oder ein Trägheitspositionsbestimmungsgerät (26) zum Bestimmen eines unkorrigierten Positionskoordinatenpaars (x0, y0) des Grünflächenbearbeitungsroboters aufweist und
- wobei das Grünflächenbearbeitungssystem (10) dazu ausgebildet ist, falls es mehrere Magnetfeld-Positionskoordinatenpaare ermittelt hat, das Magnetfeld-Positionskoordinatenpaar (x, y), welches dem unkorrigierten Positionskoordinatenpaar am nächsten ist, aus den mehreren ermittelten Magnetfeld-Positionskoordinatenpaaren auszuwählen.

14. Grünflächenbearbeitungssystem (10) nach einem der Ansprüche 8 bis 13,
- wobei der autonome mobile Grünflächenbearbeitungsroboter (20) als ein Rasenmähroboter mit einem Rasenmähwerkzeug (27) ausgebildet ist.

15. Grünflächenbearbeitungssystem (10) nach einem der Ansprüche 8 bis 14, wobei das Grünflächenbearbeitungssystem (10) aufweist:
- einen Begrenzungsdraht (101) und
- eine Stromquelle (102),
- wobei der Begrenzungsdraht zum Umgeben der zu bearbeitenden Fläche (100) ausgebildet ist und
- wobei die Stromquelle zum Erzeugen des elektrischen Stroms (I) durch den Begrenzungsdraht ausgebildet ist.
